# EUROPÄISCHE PATENTSCHRIFT

(11) **EP 2 790 953 B1**
(45) Veröffentlichungstag und Bekanntmachung des Hinweises auf die Patenterteilung: **17.07.2019**
(21) Anmeldenummer: 12808335.9
(22) Anmeldetag: 13.12.2012
(51) Int. Cl.: B60K 37/06, G06F 3/0482

(54) **VERFAHREN UND BEDIENVORRICHTUNG ZUM EINSTELLEN VON FAHRZEUGFUNKTIONEN**
METHOD AND OPERATING DEVICE FOR SETTING VEHICLE FUNCTIONS
PROCÉDÉ ET DISPOSITIF DE COMMANDE POUR RÉGLER DES FONCTIONS DE VÉHICULE

(30) Priorität: 17.12.2011 DE 102011121419; 26.05.2012 DE 102012010490; 09.06.2012 DE 102012011503
(43) Veröffentlichungstag der Anmeldung: 22.10.2014
(73) Patentinhaber: Volkswagen Aktiengesellschaft, 38440 Wolfsburg (DE)
(72) Erfinder: FAUSTMANN, Matthias, 38159 Vechelde (DE); SONNAK, Ulrich, 38108 Braunschweig (DE); SIEGMUND, Margret, 38518 Gifhorn (DE); BURGHOFF, Christian, 38106 Braunschweig (DE); KLÖPPING, Matthias, 38106 Braunschweig (DE)
(86) Internationale Anmeldenummer: PCT/EP2012/075401
(87) Internationale Veröffentlichungsnummer: WO 2013/087777

(56) Entgegenhaltungen:
- DE-A1- 10 360 655
- DE-A1- 10 360 657
- DE-A1-102006 049 964

## Beschreibung

Die vorliegende Erfindung betrifft ein Verfahren zum Einstellen von Fahrzeugfunktionen in einem Fahrzeug. Bei dem Verfahren sind mehrere Einzelfunktionen mehreren Hauptsammelfunktionen zugeordnet, sodass durch eine Auswahl einer Hauptsammelfunktion mehrere Einzelfunktionen eingestellt werden. Mittels einer Bedienvorrichtung sind die Hauptsammelfunktionen über ein von einer Anzeigevorrichtung angezeigtes Menü auswählbar, bei dem den Hauptsammelfunktionen zugeordnete Schaltflächen angezeigt werden. Ferner wird mittels der Bedienvorrichtung die Zuordnung der Einstellungen der Einzelfunktionen, die bei einer Aktivierung der jeweiligen Hauptsammelfunktion vorgenommen werden, in zumindest einem Untermenü durchgeführt. Die erfindungsgemäße Bedienvorrichtung umfasst eine Steuervorrichtung, mittels derer Fahrzeugeinrichtungen einstellbar sind. Dabei sind mehrere Einzelfunktionen für die Fahrzeugeinrichtungen mehreren Hauptsammelfunktionen zugeordnet, sodass durch eine Auswahl einer Hauptsammelfunktion mehrere Einzelfunktionen einstellbar sind. Ferner umfasst die Bedienvorrichtung eine Anzeigevorrichtung, mit der die Hauptsammelfunktionen in einem Menü anzeigbar sind, bei dem den Hauptsammelfunktionen zugeordnete Schaltflächen angezeigt werden. Des Weiteren umfasst die Bedienvorrichtung eine Eingabevorrichtung, mit der die den Hauptsammelfunktionen zugeordneten Schaltflächen in dem von der Anzeigevorrichtung angezeigten Menü auswählbar sind, wobei die Zuordnung der Einstellungen der Einzelfunktionen, die bei einer Aktivierung der jeweiligen Hauptsammelfunktion vorgenommen werden, in zumindest einem von der Anzeigevorrichtung anzeigbaren Untermenü durchführbar ist.

Mit der Zunahme elektronischer Einrichtungen im Fahrzeug wurde es erforderlich, Bediensysteme zu entwickeln, mit denen die elektronischen Einrichtungen eingestellt und bedient werden können. Es ist bekannt, dass solche Bediensysteme eine Multifunktionsanzeige und eine dieser Multifunktionsanzeige zugeordnete Eingabevorrichtung umfassen. Bei der Eingabevorrichtung kann es sich einerseits um ein von der Anzeige abgesetztes mechanisches Bedienelement handeln, wie beispielsweise einen Dreh-Drück-Steller. Andererseits kann es sich bei der Eingabevorrichtung um eine berührungsempfindliche Oberfläche handeln. Diese kann einerseits abgesetzt von der Anzeige vorgesehen sein, sodass ein sogenanntes Touchpad bereitgestellt wird. Andererseits kann die berührungsempfindliche Oberfläche auf einer Anzeigefläche ausgebildet sein, sodass ein sogenannter Touchscreen bereitgestellt wird.

Für die Bedienung der Fahrzeugeinrichtungen ergeben sich sehr spezielle Anforderungen, da sie unter anderem durch den Fahrer während der Fahrt erfolgt. Die während des Bedienablaufs angezeigten Informationen sollten daher so dargestellt werden, dass die Informationsaufnahme durch den Fahrer schnell und intuitiv erfolgen kann, sodass der Fahrer während der Fahrt nicht vom Fahrgeschehen abgelenkt wird. Es sollte insbesondere ausreichen, dass der Fahrer während des Bedienablaufs nur sehr kurzzeitig den Blick vom Fahrgeschehen abwenden muss. Des Weiteren sollte der Bedienablauf so wenig Bedienschritte wie möglich umfassen. Gleichermaßen sollte der Bedienablauf für den Nutzer intuitiv durchführbar sein.

Aus der DE 10 1009 045 760 ist ein Verfahren zur Steuerung eines Kraftfahrzeugs bekannt, bei dem die Steuerung unter Beteiligung eines Fahrerassistenzsystems erfolgt. Durch Betätigung eines Betätigungsmittels wird die Beteiligung mindestens eines Teils des Fahrerassistenzsystems an der Steuerung des Kraftfahrzeugs abgeschaltet oder verändert.

Aus der DE 102 31 245 A1 ist ein Verfahren bekannt, mit welchem das Fahrzeugniveau konstant gehalten wird. Hierfür sind Niveauverstellmittel sowie eine Niveauregeleinrichtung vorgesehen, die durch Steuerung des Niveauverstellmittels zur Angleichung eines ermittelten Ist-Fahrzeugniveaus an ein gewünschtes Soll-Fahrzeugniveau geeignet ist. Ferner umfasst das Fahrwerk des Fahrzeugs ein Dämpfungsmittel zur Dämpfung von Niveauveränderungen, wobei das Dämpfungsverhalten kontinuierlich oder in Stufen verstellbar ist.

Eine Dämpfung für ein Kraftfahrzeug, welche zumindest zwischen zwei vorgebbaren Dämpfungsmodi stufenlos einstellbar ist, ist außerdem aus der DE 100 33 770 A1 bekannt.

Aus der EP 1 355 209 A1 ist ein Fahrzeugsteuersystem bekannt, mit dem das Fahrwerk in Abhängigkeit vom Untergrund eingestellt werden kann.

Aus der DE 10 2006 022 692 B4 ist eine Vorrichtung und ein Verfahren zur Aktivierung und Deaktivierung von Funktionen eines Fahrzeugs, insbesondere eines Fahrzeugs mit Allradantrieb mit einer Bedieneinrichtung, bekannt. Die Bedieneinrichtung ist dabei zur gemeinsamen Aktivierung und Deaktivierung von mindestens zwei in einem Offroad-Betrieb des Fahrzeugs vorgesehenen Funktionen ausgebildet, wobei die zwei Funktionen eine Funktion zur Fahrunterstützung auf Gefällestrecken und eine Umschaltung auf ein für Offroad-Strecken vorgesehenes Fahrpedalkennfeld sind. Bei einer Deaktivierung der Gesamtfunktion erfolgt eine Umschaltung des Fahrpedalkennfeldes erst dann, wenn das Fahrpedal nicht mehr betätigt wird, und während eines aktiven Bremseingriffs erfolgt der Druckabbau für die Funktion zur Fahrunterstützung auf Gefällestrecken erst nach Ende der aktuellen Bergabfahrtregelung.

Aus der DE 10 2006 049 727 A1 ist ein Bedienkonzept zum Einstellen verschiedener Fahrdynamik-Charakteristika für ein Kraftfahrzeug bekannt. Dabei ist für unterschiedliche Fahrzustände ein unterschiedliches Verhalten von Stellgliedern auswählbar, welche die Längsdynamik, die Vertikaldynamik und die Querdynamik des Fahrzeugs beeinflussen. Mittels eines ersten Bedienelements ist eine definierte Einsatzart des Kraftfahrzeugs auswählbar. Die Einsatzart nimmt auf einen oder mehrere Längsdynamik-Stellglieder Einfluss. Mittels eines zweiten Bedienelements sind zumindest drei unterschiedliche Fahrdynamik-Charakteristika im Bereich zwischen Komfort und maximaler Stabilität einerseits sowie Sportlichkeit und eingeschränkter Stabilität andererseits auswählbar, in denen eine Zwangskopplung zwischen Längsdynamik-Stellgliedern, Vertikaldynamik-Stellgliedern und Querdynamik-Stellgliedern vorliegt, während in zumindest einer weiteren individuell einstellbaren Fahrdynamik-Charakteristik diese Zwangskopplung aufgehoben ist.

Aus der EP 0 796 765 B1 ist ein Verfahren zum Verändern einstellbarer Funktionen eines Fahrzeugs bekannt. Bei dem Verfahren werden auf einen Auslösebefehl die beim jeweiligen Fahrzeug möglichen einstellbaren Funktionen aus einem Speicher entnommen und auf einer Anzeige symbolisch dargestellt. Über ein Eingabemedium werden daraus die gewünschten veränderbaren Funktionen ausgewählt und auf einen Bestätigungs-Schaltbefehl hin werden die die Funktionen ausführenden Steuergeräte umprogrammiert. Bei dem Verfahren wird einer Ist-Einstellung einer über das Eingabemedium ausgewählten Funktion eine vorgegebene Werkseinstellung derselben Funktion optisch gegenübergestellt. Ferner erfolgt die Einstellung mehrerer veränderbarer Funktionen paketweise durch die Auswahl eines Einstellpakets.

Aus der WO 2005/093557 A1 ist eine Anzeige- und Bedienvorrichtung bekannt, die dem Fahrzeugbenutzer auf einfache Weise eine größere Freiheit in der Auswahl von Funktionen eines Menüs einräumen soll. Beispielsweise wird auf einem Bildschirm ein Menü "Einparken" mit sämtlichen dazugehörigen Funktionen dargestellt. Die einzelnen Funktionen sind mittels eines Dreh-Drück-Schalters der Reihe nach vorauswählbar und anschließend auswählbar. Bei einem Menüpunkt kann auch das gesamte Menü "Einparken" aktiviert bzw. deaktiviert werden.

Die DE 103 60 657 A1 offenbart den Oberbegriff der Ansprüche 1 und 9.

Der vorliegenden Erfindung liegt die Aufgabe zugrunde, ein Verfahren und eine Bedienvorrichtung der eingangs genannten Art bereitzustellen, mit denen Fahrzeugfunktionen schnell und intuitiv eingestellt werden können.

Erfindungsgemäß wird diese Aufgabe durch ein Verfahren mit den Merkmalen des Anspruchs 1 und durch eine Bedienvorrichtung mit den Merkmalen des Anspruchs 9 gelöst. Vorteilhafte Ausgestaltungen und Weiterbildungen ergeben sich aus den abhängigen Ansprüchen.

Das erfindungsgemäße Verfahren ist dadurch gekennzeichnet, dass - die Einzelfunktionen (E) zu Einzelfunktionsgruppen (A, B, C, D) gruppiert sind, wobei bei der Einstellung der Einzelfunktionen (E) für eine Hauptsammelfunktion (H) aus einer Einzelfunktionsgruppe (A, B, C, D) eine bestimmte Einzelfunktion (E) einer Hauptsammelfunktion (H) zugeordnet wird,
- zumindest eine Zwischensammelfunktion (Z) definiert ist, der Einstellungen einer Teilmenge der bestimmten Einzelfunktionen (E) zugeordnet ist, wobei bei einer Einstellung der Einzelfunktionen (E) für eine Zwischensammelfunktion (Z) aus einer Einzelfunktionsgruppe (B, D) eine bestimmte Einzelfunktion (E) der Zwischensammelfunktion (Z) zugeordnet wird,
- von der Anzeigevorrichtung gleichzeitig mit den Schaltflächen des Menüs für die Auswahl der Hauptsammelfunktionen (H) eine Schaltfläche zur Auswahl der Zwischensammelfunktion (Z) angezeigt wird und- bei einer Auswahl der Zwischensammelfunktion (Z) die Zuordnung der bestimmten Einzelfunktionen (E) der momentan ausgewählten Hauptsammelfunktion (H) verändert wird, so dass die Einstellungen der Teilmenge der bestimmten Einzelfunktionen (E) der Zwischensammelfunktion (Z) für die ausgewählte Hauptsammelfunktion (H) übernommen werden.

Unter einer Zuordnung wird im Sinne der Erfindung verstanden, dass eine Beziehung zwischen einer Hauptsammelfunktion bzw. einer Zwischensammelfunktion einerseits und mehreren Einzelfunktionen hergestellt wird. Bei einer Auswahl einer Hauptsammelfunktion werden dann die Einzelfunktionen eingesetzt bzw. ausgeführt, welche der entsprechenden Hauptsammelfunktion vorab zugeordnet wurden. Entsprechend wird bei einer Auswahl einer Zwischensammelfunktion die Zuordnung einer momentan ausgewählten bzw. aktivierten Hauptsammelfunktion verändert: Es werden nun die Einzelfunktionen der aktivierten Hauptsammelfunktion zugeordnet, welche der ausgewählten Zwischensammelfunktion zugeordnet sind.

Bei dem erfindungsgemäßen Verfahren ist es somit für bestimmte Änderungen der Zuordnung der Einzelfunktionen zu den Hauptsammelfunktionen nicht erforderlich, ein Untermenü aufzurufen, die Zuordnung dann zu ändern und das Untermenü schließlich wieder zu schließen. Stattdessen kann in der Anzeige, die auch das Menü für die Auswahl der Hauptsammelfunktionen anzeigt, die neue Zuordnung von bestimmten Einzelfunktionen zu einer Hauptsammelfunktion direkt durch die Auswahl einer Schaltfläche für eine Zwischensammelfunktion erfolgen. Vorteilhafterweise kann somit die Änderung der Einstellungen der Fahrzeugfunktionen schneller durchgeführt werden. Außerdem kann über die Zwischensammelfunktion eine Gruppe von Einzelfunktionen zusammengefasst werden, die im Kontext bestimmter Fahrsituationen zusammengehören. Vorteilhafterweise wird hierdurch die Änderung der Zuordnung der Einzelfunktionen zu den Hauptsammelfunktionen für den Nutzer intuitiver durchführbar.

Gemäß einer Weiterbildung des erfindungsgemäßen Verfahrens wird die Auswahl der Zwischensammelfunktion für eine erste Hauptsammelfunktion gespeichert, wenn eine zweite Hauptsammelfunktion ausgewählt wird. Die Auswahl der Zwischensammelfunktion für die erste Hauptsammelfunktion wird dann wieder übernommen, wenn die erste Hauptsammelfunktion wieder ausgewählt wird. Auf diese Weise kann der Nutzer vorteilhafterweise die Einzelfunktionen der Zwischensammelfunktion dauerhaft einer bestimmten Hauptsammelfunktion zuordnen, wobei es nicht erforderlich ist, ein Untermenü für die direkte Zuordnung der Einzelfunktionen für die Hauptsammelfunktion aufzurufen. Hierdurch wird vorteilhafterweise eine schnelle und dauerhafte Zuordnung von Einzelfunktionen für eine bestimmte Hauptsammelfunktion erreicht.

Gemäß einer Weiterbildung des erfindungsgemäßen Verfahrens sind die Einzelfunktionen zu Einzelfunktionsgruppen gruppiert. Bei der Einstellung der Einzelfunktionen für eine Hauptsammelfunktion oder für eine Zwischensammelfunktion wird aus einer Einzelfunktionsgruppe eine bestimmte Einzelfunktion der Hauptsammelfunktion oder der Zwischensammelfunktion zugeordnet. Auf diese Weise können bestimmte sich gegeneinander ausschließende Einzelfunktionen in Einzelfunktionsgruppen zusammengefasst werden. Hierdurch wird die Zuordnung der Einzelfunktionen zu den Hauptsammelfunktionen bzw. Zwischensammelfunktionen für den Nutzer einfacher und übersichtlicher.

Beispielsweise umfassen die Einzelfunktionsgruppen Funktionen für die Fahrwerksregelung, die Motorsteuerung, die Klimatisierung, die Lichtfunktionen und/oder die Fahrerassistenzfunktionen des Fahrzeugs. Die Hauptsammelfunktionen umfassen beispielsweise verschiedene Modi für Fahrprofile. Die Zwischensammelfunktionen umfassen beispielsweise verschiedene Modi für adaptive Fahrwerksregelungen. Für diese Einzelfunktionen ist es besonders wichtig, dass der Fahrer des Fahrzeugs schnell und intuitiv Einstelllungen vornehmen kann. Diese Ausgestaltungen des erfindungsgemäßen Verfahrens erleichtern daher vorteilhafterweise die Bedienung des Fahrzeugs.

Gemäß einer Weiterbildung des erfindungsgemäßen Verfahrens ist zumindest einer Hauptsammelfunktionen ein Modifikationsprofil zugeordnet, das mittels der Bedienvorrichtung auswählbar ist. Nach Auswahl des Modifikationsprofils sind die der Hauptsammelfunktion zugeordneten Einzelfunktionen veränderbar. Die Veränderung der Einzelfunktionen bleibt solange bestehen, bis eine andere Hauptsammelfunktion ausgewählt wird. Das Modifikationsprofil kann jederzeit ausgewählt werden. Hierfür kann von der Anzeigevorrichtung eine weitere Schaltfläche angezeigt werden, die durch eine Berührung der berührungsempfindlichen Oberfläche der Anzeigefläche ausgewählt werden kann. Alternativ oder zusätzlich ist es möglich, das Modifikationsprofil über ein von der Anzeigevorrichtung abgesetztes Bedienelement auszuwählen. Hierfür kann z. B. ein Taster vorgesehen sein.

Der Nutzer kann nach der Auswahl des Modifikationsprofils den Zustand der Einzelfunktionen verändern, welche der aktuell aktiven Hauptsammelfunktion zugeordnet sind. Die Veränderung der Einzelfunktionen bleibt auch dann wirksam, wenn die Zündung des Fahrzeugs zwischenzeitlich ausgeschaltet wurde.

Die Bereitstellung eines Modifikationsprofils ist insbesondere dann vorteilhaft, wenn die einzelnen Hauptsammelfunktionen eine große Anzahl von separat konfigurierbaren Einzelfunktionen umfasst. Außerdem ermöglicht es das Modifikationsprofil, den Zustand von Einzelfunktionen, abweichend von der Standardeinstellung, für eine Hauptsammelfunktion temporär zu verändern.

Gemäß einer weiteren Ausgestaltung des erfindungsgemäßen Verfahrens, ist es möglich, die veränderten Einstellungen für die Einzelfunktionen einer Hauptsammelfunktion als eine neue Individualsammelfunktion abzuspeichern. Eine solche Individualsammelfunktion kann in der hierarchischen Struktur in derselben Ebene wie die Hauptsammelfunktion angeordnet sein, so dass zu der Individualsammelfunktion eine weitere Schaltfläche gemeinsam mit den Schaltflächen der Hauptsammelfunktionen angezeigt wird.

Gemäß einer Weiterbildung des erfindungsgemäßen Verfahrens ist zumindest eine Einzelfunktion, insbesondere die Fahrwerksregelung des Fahrzeugs, stufenlos einstellbar. Die stufenlos einstellbare Fahrwerksregelung wird insbesondere in diskrete Dämpfermodi und in diskrete Lenkungsmodi umgesetzt. Vorteilhafterweise ist eine solche stufenlose Einstellung für den Nutzer besonders einfach und intuitiv vornehmbar. Gleichzeitig kann die stufenlose Einstellung in diskrete Modi für unterschiedliche Einzelfunktionen unterschiedlich umgesetzt werden, sodass vorteilhafterweise eine sehr flexible Umsetzung der stufenlosen Einstellung möglich ist.

Die erfindungsgemäße Bedienvorrichtung ist dadurch gekennzeichnet, dass
- die Einzelfunktionen (E) zu Einzelfunktionsgruppen (A, B, C, D) gruppierbar sind und bei der Einstellung der Einzelfunktionen (E) für eine Hauptsammelfunktion (H) aus einer Einzelfunktionsgruppe (A, B, C, D) eine bestimmte Einzelfunktion (E) einer Hauptsammelfunktion (H) zuordenbar ist,
- zumindest eine Zwischensammelfunktion (Z) definiert ist, der Einstellungen einer Teilmenge der bestimmten Einzelfunktionen (E) zugeordnet ist, wobei bei einer Einstellung der Einzelfunktionen (E) für eine Zwischensammelfunktion (Z) aus einer Einzelfunktionsgruppe (B, D) eine bestimmte Einzelfunktion (E) der Zwischensammelfunktion (Z) zuordenbar ist,
- von der Anzeigevorrichtung (2) gleichzeitig mit den Schaltflächen (8-1 bis 8-5) des Menüs für die Auswahl der Hauptsammelfunktionen (H) eine Schaltfläche (9-1 bis 9-3 zur Auswahl der Zwischensammelfunktion (Z) anzeigbar ist und- die Steuervorrichtung (5) die Fahrzeugeinrichtungen (7-1 bis 7-4) so einstellt, dass bei einer Auswahl der Zwischensammelfunktion (Z) die Zuordnung der bestimmten Einzelfunktionen (E) der momentan ausgewählten Hauptsammelfunktion (H) veränderbar ist, so dass die Einstellungen der Teilmenge der bestimmten Einzelfunktionen (E) der Zwischensammelfunktion (Z) für die ausgewählte Hauptsammelfunktion (H) übernehmbar sind.

Bei der erfindungsgemäßen Bedienvorrichtung stellt die Steuervorrichtung die Fahrzeugeinrichtungen so ein, dass bei einer Auswahl der Zwischensammelfunktion für die ausgewählte Hauptsammelfunktion die Einstellungen der Einzelfunktionen der Teilmenge übernommen werden, die der Zwischensammelfunktion zugeordnet sind.

Die erfindungsgemäße Bedienvorrichtung ist insbesondere ausgebildet, das erfindungemäße Verfahren auszuführen. Sie weist daher auch dieselben Vorteile wie das erfindungsgemäße Verfahren auf.

Die Eingabevorrichtung der erfindungsgemäßen Bedienvorrichtung umfasst insbesondere eine berührungsempfindliche Oberfläche, die auf einer Anzeigefläche der Anzeigvorrichtung ausgebildet ist. Es wird somit bevorzugt ein sogenannter Touchscreen bereitgestellt. Es ist jedoch auch möglich, statt eines Touchscreens alternativ oder zusätzlich ein abgesetztes Bedienelement, wie ein Touchpad oder ein mechanisches Bedienelement, wie beispielsweise einen Dreh-Drück-Steller, vorzusehen.

Die Erfindung wird nun anhand eines Ausführungsbeispiels mit Bezug zu den Zeichnungen erläutert.
- Figur 1: zeigt schematisch den Aufbau eines Ausführungsbeispiels der erfindungsgemäßen Bedienvorrichtung,
- Figur 2: zeigt eine Prinzipdarstellung einer Anzeige auf einer Anzeigefläche des Ausführungsbeispiels der erfindungsgemäßen Bedienvorrichtung,
- Figur 3: zeigt eine Anzeige, die von einem Ausführungsbeispiel des erfindungsgemäßen Verfahrens erzeugt wird,
- Figur 4: zeigt ein weiteres Beispiel einer Anzeige, die von dem Ausführungsbeispiel des erfindungsgemäßen Verfahrens erzeugt wird,
- Figur 5: veranschaulicht die Umsetzung einer stufenlosen Einstellung mittels des Ausführungsbeispiels des erfindungsgemäßen Verfahrens,
- Figur 6: zeigt ein weiteres Beispiel einer Anzeige, die von einer weiteren Ausgestaltung des Ausführungsbeispiels des erfindungsgemäßen Verfahrens erzeugt wird, und
- Figur 7: zeigt noch ein weiteres Beispiel einer Anzeige, die von dieser Ausgestaltung des Ausführungsbeispiels des erfindungsgemäßen Verfahrens erzeugt wird.

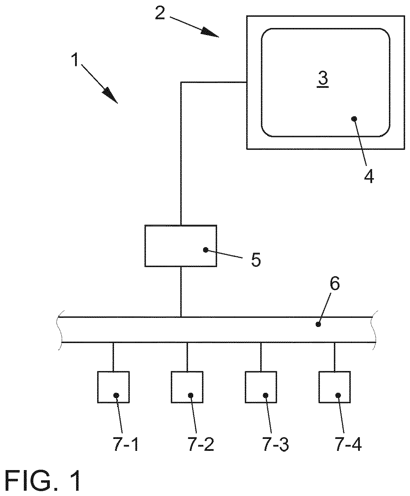

Mit Bezug zur Figur 1 wird das Ausführungsbeispiel der Bedienvorrichtung 1 erläutert:
Die Bedienvorrichtung 1 umfasst eine Anzeigevorrichtung 2 mit einer Anzeigefläche 3, die so im Innenraum des Fahrzeugs angeordnet ist, dass sie für zumindest einen Fahrzeuginsassen, insbesondere den Fahrer, gut sichtbar und gut erreichbar ist. Die Anzeigefläche 3 kann von einem Display, insbesondere einem frei programmierbaren Matrixdisplay, beliebiger Bauart bereitgestellt werden.

Die Bedienvorrichtung 1 umfasst ferner eine Steuervorrichtung 5, welche mit der Anzeigevorrichtung 2 verbunden ist und mit welcher Grafikdaten zur Informationsdarstellung auf der Anzeigefläche 3 erzeugbar sind. Des Weiteren umfasst die Bedienvorrichtung 1 eine Eingabevorrichtung, die als berührungsempfindliche Oberfläche 4 auf der Anzeigefläche 3 ausgebildet ist. Es wird somit ein sogenannter Touchscreen bereitgestellt.

Die Steuervorrichtung 5 ist mit einem Datenbus 6 des Fahrzeugs gekoppelt, welcher wiederum mit verschiedenen Fahrzeugeinrichtungen 7-1 bis 7-4 gekoppelt ist. Zwischen der Steuervorrichtung 5 und den Fahrzeugeinrichtungen 7-1 bis 7-4 werden bidirektional Daten ausgetauscht, sodass von der Steuervorrichtung 5 Grafikdaten für Anzeigen erzeugt werden, die den jeweiligen Fahrzeugeinrichtungen 7-1 bis 7-4 zugeordnet sind. Umgekehrt erfasst die Steuervorrichtung 5 Eingaben eines Nutzers auf der berührungsempfindlichen Oberfläche 4 und setzt diese in entsprechende Steuersignale für die Fahrzeugeinrichtungen 7-1 bis 7-4 um. Auf diese Weise ermöglicht die Bedienvorrichtung 1 eine Bedienung der Fahrzeugeinrichtungen 7-1 bis 7-4, welche durch eine Anzeige auf der Anzeigefläche 3 unterstützt wird.

Im Folgenden wird das Bedienkonzept eines Ausführungsbeispiels des erfindungsgemäßen Verfahrens erläutert, welches von der Bedienvorrichtung 1 umgesetzt wird:
Für die verschiedenen Fahrzeugeinrichtungen 7-1 bis 7-4 gibt es eine Vielzahl von Einzelfunktionen E. Die Einzelfunktionen sind zu Einzelfunktionsgruppen gruppiert. Beispielsweise können die Einzelfunktionsgruppen A, B, C, D gebildet sein. Zu der Einzelfunktionsgruppe A gehören folgende Einzelfunktionen: {E-A1, E-A2, E-A3}. Zu der Einzelfunktionsgruppe B gehören beispielsweise die folgenden Einzelfunktionen: {E-B1, E-B2, ..., E-B8}. Entsprechend gehören zu den Einzelfunktionsgruppen C und D die folgenden Einzelfunktionen: {E-C1, E-C2, ..., E-C5} sowie {E-D1, E-D2, ..., E-D9}.

Die Einzelfunktionsgruppen können verschiedene Funktionsbereiche des Fahrzeugs betreffen, die im Wesentlichen unabhängig voneinander sind, die jedoch gemeinsam mittels einer Hauptsammelfunktion eingestellt werden sollen. Den Hauptsammelfunktionen H1 bis H4 (im folgenden auch zusammengefasst mit H bezeichnet) sind nun einzelne Einzelfunktionen E zugeordnet. Diese Zuordnung kann vorab bzw. werkseitig vorgenommen werden. Sie ist jedoch zumindest zum Teil vom Nutzer veränderbar. Hierfür ruft der Nutzer durch eine entsprechende Eingabe in die Bedienvorrichtung 1 ein separates Untermenü auf und gibt an, welche Einzelfunktionen E den Hauptsammelfunktionen H1 bis H4 zugeordnet werden sollen. Beispielsweise kann folgende Zuordnung vorgenommen werden:
H1: {E-A1, E-B3, E-C2, E-D8}
H2: {E-A3, E-B7, E-C1, E-D2}
H3: {E-A2, E-B1, E-D5}
H4: {E-A1, E-B6, E-C4}.

Für eine Hauptsammelfunktion H wird somit jeweils eine Einzelfunktion E einer Einzelfunktionsgruppe ausgewählt. Es ist jedoch nicht erforderlich, dass zu jeder Einzelfunktionsgruppe eine Einzelfunktion einer Hauptsammelfunktion H zugeordnet wird.

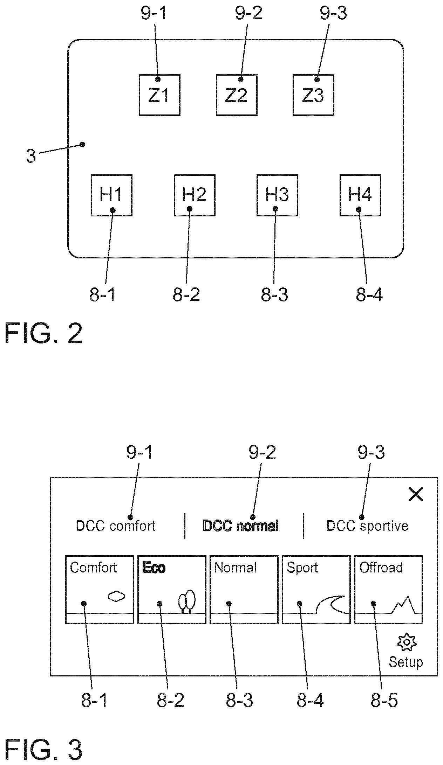

Für die Auswahl einer Hauptsammelfunktion H1 bis H4 werden, wie in Figur 2 gezeigt, für die Hauptsammelfunktionen H1 bis H4 Schaltflächen 8-1 bis 8-4 angezeigt. Der Nutzer kann eine Hauptsammelfunktion H1 bis H4 dadurch aktivieren, dass er die berührungsempfindliche Oberfläche 4 bei einer Position berührt, bei welcher die entsprechende Schaltfläche 8-1 bis 8-4 angezeigt wird.

Des Weiteren sind Zwischensammelfunktionen Z1 bis Z3 (im folgenden auch zusammengefasst mit Z bezeichnet) definiert. Den Zwischensammelfunktionen Z sind Einstellungen einer Teilmenge der Einzelfunktionen E zugeordnet. Beispielsweise ergibt sich folgende Zuordnung:
Z1: {E-B5, E-D9}
Z2: {E-C3, E-D1}
Z3: {E-A1, E-B1, E-C4}.

In dem in Figur 1 gezeigten Auswahlmenü zur Auswahl der Hauptsammelfunktionen H1 bis H4 werden gleichzeitig Schaltflächen 9-1 bis 9-3 angezeigt, über welche die Zwischensammelfunktionen Z1 bis Z3 ausgewählt werden können. Bei einer Auswahl einer Zwischensammelfunktion Z werden für die momentan ausgewählte bzw. aktivierte Hauptsammelfunktion H die Einstellungen der Einzelfunktionen E der Teilmenge übernommen, die der jeweiligen Zwischensammelfunktion Z zugeordnet sind. Ist beispielsweise momentan die Hauptsammelfunktion H1 aktiv und wählt der Nutzer in diesem Zustand die Zwischensammelfunktion Z1 aus, indem er die berührungsempfindliche Oberfläche 4 bei der Schaltfläche 9-1 berührt, wird die Zuordnung der Einzelfunktionen der Hauptsammelfunktion H1 wie folgt geändert:
H1: {E-A1, E-B5, E-C2, E-D9}.

Die Einzelfunktion E der Einzelfunktionsgruppe B wurde somit von E-B3 auf E-B5 geändert und entsprechend wurde die Einzelfunktion E der Einzelfunktionsgruppe D von E-D8 auf E-D9 entsprechend der Zuordnung zu der Zwischensammelfunktion Z1 geändert. Für diese Änderung der Zuordnung der Einzelfunktionen E zu einer bestimmten Hauptsammelfunktion H ist es nicht erforderlich, dass der Nutzer ein Untermenü aufruft. Die Änderung kann vielmehr über dieselbe Anzeige erfolgen, über welche auch die Auswahl der Hauptsammelfunktionen H möglich ist. Auch bei einem Wechsel der Hauptsammelfunktion H bleibt diese veränderte Zuordnung erhalten. Sie wird in einem Speicher der Steuervorrichtung 5 gespeichert. Wenn der Nutzer somit beispielsweise zu der Hauptsammelfunktion H2 wechselt und danach wieder zurück zu der Hauptsammelfunktion H1 wechselt, sind diese Hauptsammelfunktionen A1 weiterhin die Einzelfunktionen E-A1, E-B5, E-C2, E-D9 zugeordnet.

Die Einzelfunktionsgruppen können Funktionen für die Fahrwerksregelung, die Motorsteuerung, die Klimatisierung, die Lichtfunktionen und/oder die Fahrerassistenzfunktionen mit den jeweils dazugehörigen Einzelfunktionen des Fahrzeugs umfassen. Im Folgenden wird das Bedienkonzept der Erfindung anhand der Einstellung der Fahrwerksregelung mit Bezug zu den Figuren 3 bis 5 erläutert:
Für das Fahrzeug sind verschiedene Fahrprofile als Hauptsammelfunktionen H definiert. Im vorliegenden Beispiel sind folgende Fahrprofile definiert: Comfort, Eco, Normal, Sport, Offroad. In den jeweiligen Fahrprofilen sind eine Vielzahl von Einzelfunktionen E aus den Einzelfunktionsgruppen Fahrwerksregelung, Motorsteuerung, Klimatisierung, u.s.w. zugeordnet.

Zur Auswahl eines Fahrprofils werden in dem in Figur 3 dargestellten Menü auf der Anzeigefläche 3 die Schaltflächen 8-1 bis 8-5 angezeigt.

Des Weiteren umfasst das Fahrzeug eine adaptive Fahrwerkregelung, welche auch DCC abgekürzt wird. Die Fahrwerksregelung umfasst Einzelfunktionen zu der Dämpferregelung und der Lenkung der Fahrzeugs. Für die adaptive Fahrwerkregelung sind drei Zwischensammelfunktionen DCC Comfort, DCC Normal und DCC Sportiv definiert. Zur Auswahl dieser Zwischensammelfunktionen werden in dem Menü, über welches die Hauptsammelfunktionen ausgewählt werden können, die Schaltflächen 9-1 bis 9-3 angezeigt.

In dem in Figur 3 gezeigten Beispiel ist die Hauptsammelfunktion Eco aktiviert. Dieser Hauptsammelfunktion sind verschiedene Einzelfunktionen aus allen Bereichen des Fahrzeugs zugeordnet, die eine sparsame Fahrweise unterstützen. Hierzu gehören auch bestimmte Einzelfunktionen zu der adaptiven Fahrwerksregelung. Unabhängig von der Voreinstellung der adaptiven Fahrwerksregelung für die Hauptsammelfunktion Eco kann der Nutzer nun über die Zwischensammelfunktionen für die adaptive Fahrwerksregelung sehr einfach und schnell die Einzelfunktionen, welche die adaptive Fahrwerksregelung der Hauptsammelfunktion Eco betreffen, verändern, indem er eine bestimmte Zwischensammelfunktion DCC Comfort, DCC Normal oder DCC Sportiv über die Schaltflächen 9-1 bis 9-3 auswählt. Hierdurch wird die Zuordnung der Einzelfunktionen zu der Hauptsammelfunktion Eco wie vorstehend erläutert, verändert. Es ist somit nicht erforderlich, dass der Nutzer das separate Untermenü aufruft, mit dem die Zuordnungen der Einzelfunktionen zu den Hauptsammelfunktionen verändert werden können. Durch die Zwischensammelfunktionen DCC Comfort, DCC Normal und DCC Sportiv kann der Nutzer direkt die Einzelfunktionen verändern, welche die adaptive Fahrwerksregelung betreffen, und zwar in dem Menü, in welchem auch die Hauptsammelfunktionen ausgewählt werden.

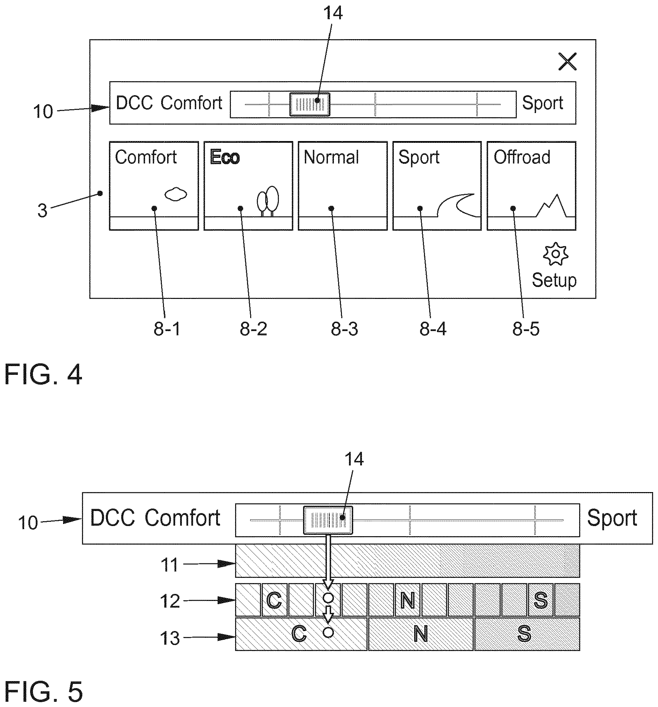

In Figur 4 ist eine Variante des mit Bezug zu Figur 3 erläuterten Ausführungsbeispiels gezeigt. In diesem Fall werden für die Zwischensammelfunktionen keine separaten Schaltflächen 9-1 bis 9-3 angezeigt, sondern es wird ein kontinuierlicher Schieberegler 10 mit einem Stellglied 14 auf der Anzeigefläche 3 angezeigt. Der Nutzer kann das Stellglied 14 auf der berührungsempfindlichen Oberfläche 4 berühren und das Stellglied 14 dann kontinuierlich zwischen der Einstellung Comfort und der Einstellung Sport verschieben. Die Position des Stellglieds 14 wird dann in der Steuervorrichtung 5 in Einstellungen für die Einzelfunktionen für die adaptive Fahrwerksregelung umgesetzt. Diese Umsetzung wird anhand der Darstellung der Figur 5 erläutert:
Die an sich stufenlose Einstellung des Stellglieds 14 wird, wie es anhand des Balkens 11 dargestellt ist, durch Parameterinterpolation in eine feinstufige Einstellung für den Dämpfermodus umgesetzt. Dies wird durch den Balken 12 dargestellt, welcher 13 Segmente umfasst, welche der Einstellung für den Dämpfermodus zugeordnet sind. Ferner sind für den Lenkungsmodus drei Stufen definiert, wie es anhand des Balkens 13 dargestellt ist. Die an sich stufenlose Einstellung des Stellglieds 14 wird somit in die vierte Stufe für den Dämpfermodus und die erste Stufe für den Lenkungsmodus umgesetzt.

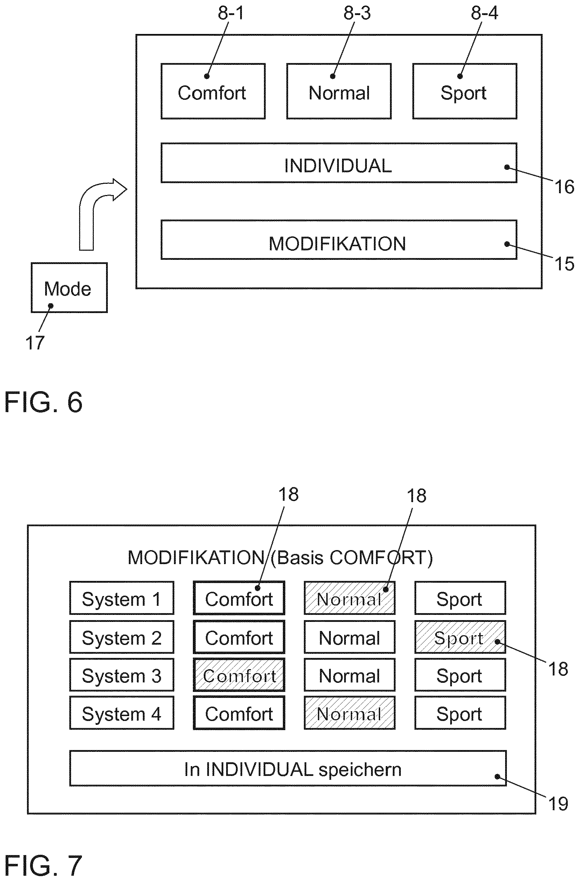

Mit Bezug zu den Figuren 6 und 7 wird eine weitere Ausgestaltung des Ausführungsbeispiels des erfindungsgemäßen Verfahrens erläutert:
In diesem Fall wird, wie in Figur 6 gezeigt, zusätzlich zu den Schaltflächen 8-1, 8-3 und 8-4 für die Hauptsammelfunktionen H eine Schaltfläche 15 für ein Modifikationsprofil angezeigt. Des Weiteren wird eine Schaltfläche 16 zum Aufruf von Individualsammelfunktionen angezeigt, welche später erläutert werden.

Die Schaltflächen können in diesem Fall über ein mechanisches Bedienelement 17 der Bedienvorrichtung 1 aufgerufen werden.

Wenn mittels des Bedienelements 17 die Schaltfläche 16 für das Modifikationsprofil ausgewählt wird, wird auf der Anzeigefläche 3 die in Figur 7 dargestellte Anzeige wiedergegeben. Die Einzelfunktionen E sind hiermit als System1, System2, System3 und System4 bezeichnet. Zu diesen Einzelfunktionen gibt es jeweils die Einstellungen COMFORT, NORMAL, SPORT. Die Anzeige der Zustände COMFORT, NORMAL, SPORT sind als Schaltflächen 18 ausgebildet. Der Nutzer kann für jede Einzelfunktion über das Modifikationsprofil die Einzelfunktionen E, die der aktuellen Hauptsammelfunktion H zugeordnet sind, verändern. Diese Modifikation ist bis zum nächsten Wechsel zu einer anderen Hauptsammelfunktion H aktiv, auch dann, wenn zwischenzeitlich die Zündung des Kraftfahrzeugs ausgeschaltet wurde.

Des Weiteren wird eine Schaltfläche 19 zum Speichern der Veränderungen der Einstellungen der Hauptsammelfunktion H angezeigt. Betätigt der Nutzer die Schaltfläche 19, wird die Veränderung der Einstellungen als neue Individualsammelfunktion gespeichert. Diese kann dann über die Schaltfläche 16 (s. Figur 6) aufgerufen werden.

Über das Modifikationsprofil kann beispielsweise das Fahrzeugniveau temporär zum Beladen abgesenkt werden. Andererseits ist es über das Modifikationsprofil möglich, bei einer Schlechtwegstrecke das Fahrzeugniveau temporär anzuheben.

Es ist somit möglich, auf einfache Weise temporäre Modifikationen der Fahrzeugeinstellungen vorzunehmen, ohne dass dauerhaft eine Individualsammelfunktion konfiguriert werden muss. Andererseits ist es durch Abspeichern der Veränderungen im Modifikationsprofil möglich, auf einfache Weise eine Individualsammelfunktion zu definieren, die z. B. von den festen Hauptsammelfunktionen COMFORT nur für den Antrieb des Fahrzeugs die Einstellungen SPORT umfasst.

Das mechanische Bedienelement 17 kann z. B. als Drehwahlschalter für Antriebssperrenfunktionen oder Taster, ggf. mit Toggelfunktion, für die Wahl des Dämpfungsprogramms ausgebildet sein. Schließlich könnte auch ein Schieberegler eingesetzt werden.

## Patentansprüche

1. Verfahren zum Einstellen von Fahrzeugfunktionen in einem Fahrzeug, bei dem
- mehrere Einzelfunktionen (E) mehreren Hauptsammelfunktionen (H) zugeordnet sind, sodass durch eine Auswahl einer Hauptsammelfunktion (H) mehrere Einzelfunktionen (E) eingestellt werden, und
- mittels einer Bedienvorrichtung (1) die Hauptsammelfunktionen (H) über ein von einer Anzeigevorrichtung (2) angezeigtes Menü auswählbar sind, bei dem den Hauptsammelfunktionen (H) zugeordnete Schaltflächen (8-1 bis 8-5) angezeigt werden, und die Zuordnung der Einstellungen der Einzelfunktionen (E), die bei einer Aktivierung der jeweiligen Hauptsammelfunktion (H) vorgenommen werden, in zumindest einem Untermenü durchgeführt wird,
**dadurch gekennzeichnet, dass**
- die Einzelfunktionen (E) zu Einzelfunktionsgruppen (A, B, C, D) gruppiert sind, wobei bei der Einstellung der Einzelfunktionen (E) für eine Hauptsammelfunktion (H) aus einer Einzelfunktionsgruppe (A, B, C, D) eine bestimmte Einzelfunktion (E) einer Hauptsammelfunktion (H) zugeordnet wird,
- zumindest eine Zwischensammelfunktion (Z) definiert ist, der Einstellungen einer Teilmenge der bestimmten Einzelfunktionen (E) zugeordnet ist, wobei bei einer Einstellung der Einzelfunktionen (E) für eine Zwischensammelfunktion (Z) aus einer Einzelfunktionsgruppe (B, D) eine bestimmte Einzelfunktion (E) der Zwischensammelfunktion (Z) zugeordnet wird,
- von der Anzeigevorrichtung (2) gleichzeitig mit den Schaltflächen (8-1 bis 8-5) des Menüs für die Auswahl der Hauptsammelfunktionen (H) eine Schaltfläche (9-1 bis 9-3) zur Auswahl der Zwischensammelfunktion (Z) angezeigt wird und
- bei einer Auswahl der Zwischensammelfunktion (Z) die Zuordnung der bestimmten Einzelfunktionen (E) der momentan ausgewählten Hauptsammelfunktion (H) verändert wird, so dass die Einstellungen der Teilmenge der bestimmten Einzelfunktionen (E) der Zwischensammelfunktion (Z) für die ausgewählte Hauptsammelfunktion (H) übernommen werden.

2. Verfahren nach Anspruch 1,
**dadurch gekennzeichnet,**
**dass** die Auswahl der Zwischensammelfunktion (Z) für eine erste Hauptsammelfunktion (H2) gespeichert wird, wenn eine zweite Hauptsammelfunktion (H3) ausgewählt wird und dass die Auswahl der Zwischensammelfunktion (Z) für die erste Hauptsammelfunktion (H2) wieder übernommen wird, wenn die erste Hauptsammelfunktion (H2) wieder ausgewählt wird.

3. Verfahren nach Anspruch 1 oder 2,
**dadurch gekennzeichnet,**
**dass** die Einzelfunktionsgruppen (A, B, C, D) Funktionen für die Fahrwerksregelung, die Motorsteuerung, die Klimatisierung, die Lichtfunktionen und/oder die Fahrerassistenzfunktionen des Fahrzeugs umfassen und/oder dass die Hauptsammelfunktionen (H) verschiedene Modi für Fahrprofile umfassen.

4. Verfahren nach einem der vorhergehenden Ansprüche
**dadurch gekennzeichnet,**
**dass** die Zwischensammelfunktionen (Z) verschiedene Modi für adaptive Fahrwerksregelungen umfassen.

5. Verfahren nach einem der vorhergehenden Ansprüche,
**dadurch gekennzeichnet, dass**
- zumindest einer Hauptsammelfunktion (H) ein Modifikationsprofil zugeordnet ist, das mittels der Bedienvorrichtung auswählbar ist,
- nach Auswahl des Modifikationsprofils sie der Hauptsammelfunktion (H) zugeordneten Einzelfunktionen (E) veränderbar sind und
- die Veränderung der Einzelfunktionen (E) solange bestehen bleibt, bis eine andere Hauptsammelfunktion (H) ausgewählt wird.

6. Verfahren nach einem der vorhergehenden Ansprüche,
**dadurch gekennzeichnet,**
**dass** zumindest eine Einzelfunktion (E) stufenlos einstellbar ist.

7. Verfahren nach Anspruch 6,
**dadurch gekennzeichnet,**
**dass** die stufenlos einstellbare Einzelfunktion (E) eine Fahrwerksregelung des Fahrzeugs ist.

8. Verfahren nach Anspruch 7,
**dadurch gekennzeichnet,**
**dass** die stufenlos einstellbare Fahrwerksregelung des Fahrzeugs in diskrete Dämpfermodi und in diskrete Lenkungsmodi umgesetzt wird.

9. Bedienvorrichtung (1) zum Einstellen von Fahrzeugfunktionen in einem Fahrzeug mit
- einer Steuervorrichtung (5), mittels derer Fahrzeugeinrichtungen (7-1 bis 7-4) einstellbar sind, wobei mehrere Einzelfunktionen (E) für die Fahrzeugeinrichtungen (7-1 bis 7-4) mehreren Hauptsammelfunktionen (H) zugeordnet sind, sodass durch eine Auswahl einer Hauptsammelfunktion (H) mehrere Einzelfunktionen (E) einstellbar sind,
- einer Anzeigevorrichtung (2), mit der die Hauptsammelfunktionen (H) in einem Menü anzeigbar sind, bei dem den Hauptsammelfunktionen (H) zugeordnete Schaltflächen (8-1 bis 8-5) angezeigt werden, und
- einer Eingabevorrichtung (4), mit der die den Hauptsammelfunktionen (H) zugeordneten Schaltflächen (8-1 bis 8-5) in dem von der Anzeigevorrichtung (2) angezeigten Menü auswählbar sind, wobei die Zuordnung der Einstellungen der Einzelfunktionen (E), die bei einer Aktivierung der jeweiligen Hauptsammelfunktion (H) vorgenommen werden, in zumindest einem von der Anzeigevorrichtung (2) anzeigbaren Untermenü durchführbar ist,
**dadurch gekennzeichnet, dass**
- die Einzelfunktionen (E) zu Einzelfunktionsgruppen (A, B, C, D) gruppierbar sind und bei der Einstellung der Einzelfunktionen (E) für eine Hauptsammelfunktion (H) aus einer Einzelfunktionsgruppe (A, B, C, D) eine bestimmte Einzelfunktion (E) einer Hauptsammelfunktion (H) zuordenbar ist,
- zumindest eine Zwischensammelfunktion (Z) definiert ist, der Einstellungen einer Teilmenge der bestimmten Einzelfunktionen (E) zugeordnet ist, wobei bei einer Einstellung der Einzelfunktionen (E) für eine Zwischensammelfunktion (Z) aus einer Einzelfunktionsgruppe (B, D) eine bestimmte Einzelfunktion (E) der Zwischensammelfunktion (Z) zuordenbar ist,
- von der Anzeigevorrichtung (2) gleichzeitig mit den Schaltflächen (8-1 bis 8-5) des Menüs für die Auswahl der Hauptsammelfunktionen (H) eine Schaltfläche (9-1 bis 9-3 zur Auswahl der Zwischensammelfunktion (Z) anzeigbar ist und
- die Steuervorrichtung (5) die Fahrzeugeinrichtungen (7-1 bis 7-4) so einstellt, dass bei einer Auswahl der Zwischensammelfunktion (Z) die Zuordnung der bestimmten Einzelfunktionen (E) der momentan ausgewählten Hauptsammelfunktion (H) veränderbar ist, so dass die Einstellungen der Teilmenge der bestimmten Einzelfunktionen (E) der Zwischensammelfunktion (Z) für die ausgewählte Hauptsammelfunktion (H) übernehmbar sind.

## Claims

1. Method for setting vehicle functions in a vehicle, wherein a plurality of individual functions (E) are assigned to a plurality of main collection functions (H) so that a plurality of individual functions (E) may be set by selecting a main collection function (H), and wherein the main collection functions (H) may be selected via a menu presented on a display device (2) via an operating device (1), wherein the buttons (8-1 to 8-5) assigned to the main collection functions (H) are displayed thereon, and the assignment of the settings of the individual functions (E), which are implemented upon activation of the respective main collection function (H), is effected via at least one submenu,
**characterized in that**
- the individual functions (E) are grouped into individual function groups (A, B, C, D), wherein a specific individual function (E) is assigned from an individual function group (A, B, C, D) to a main collection function (H) in the setting of the individual functions (E) for a main collection function (H),
- at least one intermediate collection function (Z) is defined and is assigned to the settings of a subset of the specific individual functions (E), wherein a specific individual function (E) is assigned to the intermediate collection function (Z) upon the setting of the individual functions (E) from a individual function group (B, D) for an intermediate collection function (Z),
- a button (9-1 to 9-3) for selecting the intermediate collection function (Z), is presented by the display device (2) simultaneously with the buttons (8-1 to 8-5) of the menu for selecting the main collection functions (H), and
- upon selection of the intermediate collection function (Z), the assignment of the particular individual functions (E) of the currently selected main collection function (H) is changed, so that the setting of the subset of specific individual functions (E) of the intermediate collection function (Z) is undertaken for the selected main collection function (H).

2. Method according to claim 1, **characterized in that** the selection of the intermediate collection function (Z) for a first main collection function (H2) is stored, when a second main collection function (H3) is selected, and the selection of the intermediate collection function (Z) for the first main collection is again undertaken.

3. Method according to claim 1 or 2, **characterized in that** the individual function groups (A, B, C, D) comprise functions for chassis control, engine control, air conditioning, lighting functions and/or driver assistance functions of the vehicle, and/or the main collection functions (H) comprise different modes for driving profiles.

4. Method according to any one of the preceding claims **characterized in that** the intermediate collection functions (Z) comprise different adaptive chassis control modes.

5. Method according to any one of the preceding claims, **characterized in that**
- at least one main collection function (H) is assigned a modification profile that may be selected by means of the operating device,
- after selecting the modification profile, the individual functions (E) assigned to the main collection function (H) may be changed, and
- the change in the individual functions (E) remains in effect until another main collection function (H) is selected.

6. Method according to any one of the preceding claims, **characterized in that** at least one individual function (E) is infinitely adjustable.

7. Method according to claim 6, **characterized in that** the infinitely adjustable individual function (E) is a chassis control of the vehicle.

8. Method according to claim 7, **characterized in that** the continuously variable suspension control of the vehicle is converted into discrete damper modes and discrete steering modes.

9. Operating device (1) for setting vehicle functions in a vehicle with
- a control device (5), by means of which vehicle devices (7-1 to 7-4) may be adjusted, wherein a plurality of individual functions (E) for the vehicle devices (7-1 to 7-4) are assigned to a plurality of main collection functions (H), so that a plurality of individual functions (E) may be adjusted by a selection of a main collection function (H),
- a display device (2) may display the main collection functions (H) in a menu in which the buttons (8-1 to 8-5) assigned to the main collection functions (H) are displayed, and
- an input device (4) with which the buttons (8-1 to 8-5) assigned to the main collection functions (H) may be selected in the menu displayed by the display device (2), wherein the assignment of the settings of the individual functions (E), which is effected upon activation of the respective main collection function (H), may be displayed in at least one of the submenus of the display device (2),
**characterized in that**
- the individual functions (E) may be grouped in individual function groups (A, B, C, D), and a specific individual function (E) from a individual function group (A, B, C, D) may be assigned to a main collection function (H) in the setting of the individual functions (E) for a main collection function (H),
- at least one intermediate collection function (Z) is defined and assigned to the settings of a subset of the specific individual functions (E), wherein a specific individual function (E) from a individual function group (B, D) may be assigned to the intermediate collection function (Z) upon setting of the individual functions (E) for an intermediate collection function (Z),
- a button (9-1 to 9-3 for selecting the intermediate collection function (Z) may be simultaneously displayed by the display device (2) with the buttons (8-1 to 8-5) of the menu for the selection of the main collection functions (H), and
- the control device (5) so adjusts the vehicle devices (7-1 to 7-4) that the assignment of the specific individual functions (E) of the currently selected main collection function (H) may be varied in a selection of the intermediate collection function (Z), so that the setting of the subset of the specific individual functions (E) of the intermediate collection function (Z) may be undertaken for the selected main collection function (H).

## Revendications

1. Procédé destiné à régler des fonctions dans un véhicule, dans lequel
- plusieurs fonctions individuelles (E) sont affectées à plusieurs fonctions collectives principales (H) de telle sorte que plusieurs fonctions individuelles (E) peuvent être réglées par une sélection d'une fonction collective principale (H), et
- au moyen d'un dispositif de manoeuvre (1), les fonctions collectives principales (H) peuvent être sélectionnées par le biais d'un menu affiché par un dispositif d'affichage (2) dans lequel des surfaces de commande (8-1 à 8-5) affectées aux fonctions collectives principales (H) sont affichées, et l'affectation des réglages des fonctions individuelles (E) qui sont réalisés lors d'une activation de la fonction collective principale (H) respective est effectuée dans au moins un sous-menu,
**caractérisé en ce que**
- les fonctions individuelles (E) sont groupées en groupes de fonctions individuelles (A, B, C, D), une fonction individuelle (E) définie étant affectée à une fonction collective principale (H) lors du réglage des fonctions individuelles (E) pour une fonction collective principale (H) à partir d'un groupe de fonctions individuelles (A, B, C, D),
- au moins une fonction collective intermédiaire (Z) est définie, à laquelle sont affectés des réglages d'une quantité partielle des fonctions individuelles (E) définies, une fonction individuelle (E) définie étant affectée à la fonction collective intermédiaire (Z) lors d'un réglage des fonctions individuelles (E) pour une fonction collective intermédiaire (Z) à partir d'un groupe de fonctions individuelles (B, D),
- une surface de commande (9-1 à 9-3) pour la sélection de la fonction collective intermédiaire (Z) est affichée par le dispositif d'affichage (2) simultanément avec les surfaces de commande (8-1 à 8-5) du menu pour la sélection des fonctions collectives principales (H), et
- l'affectation des fonctions individuelles (E) définies à la fonction collective principale (H) sélectionnée momentanément est modifiée lors d'une sélection de la fonction collective intermédiaire (Z) de telle sorte que les réglages de la quantité partielle des fonctions individuelles (E) définies de la fonction collective intermédiaire (Z) sont pris en charge pour la fonction collective principale (H) sélectionnée.

2. Procédé selon la revendication 1,
**caractérisé en ce que**
la sélection de la fonction collective intermédiaire (Z) est enregistrée pour une première fonction collective principale (H2) quand une deuxième fonction collective principale (H3) est sélectionnée, et **en ce que** la sélection de la fonction collective intermédiaire (Z) pour la première fonction collective principale (H2) est de nouveau prise en charge quand la première fonction collective principale (H2) est de nouveau sélectionnée.

3. Procédé selon la revendication 1 ou 2,
**caractérisé en ce que**
les groupes de fonctions individuelles (A, B, C, D) comprennent des fonctions pour la régulation du châssis, la commande du moteur, la climatisation, les fonctions d'éclairage et/ou les fonctions d'assistance à la conduite du véhicule, et/ou **en ce que** les fonctions collectives principales (H) comprennent différents modes pour des profils de conduite.

4. Procédé selon l'une des revendications précédentes,
**caractérisé en ce que**
les fonctions collectives intermédiaires (Z) comprennent différents modes pour des régulations adaptatives du châssis.

5. Procédé selon l'une des revendications précédentes,
**caractérisé en ce que**
- au moins un profil de modification est affecté à une fonction collective principale (H) et peut être sélectionné au moyen du dispositif de manoeuvre,
- après la sélection du profil de modification, les fonctions individuelles (E) affectées à la fonction collective principale (H) peuvent être modifiées, et
- la modification des fonctions individuelles (E) persiste jusqu'à ce qu'une autre fonction collective principale (H) soit sélectionnée.

6. Procédé selon l'une des revendications précédentes,
**caractérisé en ce**
**qu'**au moins une fonction individuelle (E) est réglable de façon continue.

7. Procédé selon la revendication 6,
**caractérisé en ce que**
la fonction individuelle (E) réglable de façon continue est une régulation de châssis du véhicule.

8. Procédé selon la revendication 7,
**caractérisé en ce que**
la régulation de châssis du véhicule réglable de façon continue est transposée en modes d'amortisseur discrets et en modes de direction discrets.

9. Dispositif de manoeuvre (1) destiné au réglage de fonctions de véhicule dans un véhicule, avec
- un dispositif de commande (5) au moyen duquel des équipements de véhicule (7-1 à 7-4) peuvent être réglés, plusieurs fonctions individuelles (E) pour les équipements de véhicule (7-1 à 7-4) étant affectées à plusieurs fonctions collectives principales (H) de telle sorte que plusieurs fonctions individuelles (E) peuvent être réglées par une sélection d'une fonction collective principale (H),
- un dispositif d'affichage (2), avec lequel les fonctions collectives principales (H) peuvent être affichées dans un menu avec lequel des surfaces de commande (8-1 à 8-5) affectées aux fonctions collectives principales (H) sont affichées, et
- un dispositif d'entrée (4) avec lequel les surfaces de commande (8-1 à 8-5) affectées aux fonctions collectives principales (H) peuvent être sélectionnées dans le menu affiché par le dispositif d'affichage (2), l'affectation des réglages des fonctions individuelles (E) qui sont réalisés lors d'une activation de la fonction collective principale (H) respective pouvant être effectuée dans au moins un sous-menu pouvant être affiché par le dispositif d'affichage (2),
**caractérisé en ce que**
- les fonctions individuelles (E) peuvent être groupées en groupes de fonctions individuelles (A, B, C, D), et une fonction individuelle (E) définie peut être affectée à une fonction collective principale (H) lors du réglage des fonctions individuelles (E) pour une fonction collective principale (H) à partir d'un groupe de fonctions individuelles (A, B, C, D),
- au moins une fonction collective intermédiaire (Z) est définie, à laquelle des réglages d'une quantité partielle des fonctions individuelles (E) définies sont affectés, une fonction individuelle (E) définie pouvant être affectée à la fonction collective intermédiaire (Z) lors d'un réglage des fonctions individuelles (E) pour une fonction collective intermédiaire (Z) à partir d'un groupe de fonctions individuelles (B, D),
- une surface de commande (9-1 à 9-3) peut être affichée par le dispositif d'affichage (2) pour la sélection de la fonction collective intermédiaire (Z) simultanément avec les surfaces de commande (8-1 à 8-5) du menu pour la sélection des fonctions collectives principales (H), et
- le dispositif de commande (5) règle les équipements de véhicule (7-1 à 7-4) de telle sorte que, lors d'une sélection de la fonction collective intermédiaire (Z), l'affectation des fonctions individuelles (E) définies à la fonction collective principale (H) sélectionnée momentanément peut être modifiée de telle sorte que les réglages de la quantité partielle des fonctions individuelles (E) définies de la fonction collective intermédiaire (Z) pour la fonction collective principale (H) sélectionnée peuvent être pris en charge.
